# EUROPEAN PATENT SPECIFICATION

(11) **EP 2 052 776 B1**
(45) Date of publication and mention of the grant of the patent: **21.07.2010**
(21) Application number: 06010355.3
(22) Date of filing: 19.05.2006
(51) Int. Cl.: B01L 3/02, B01L 3/00, G01N 35/10

(54) **Adapter for a microfluidic device for coupling with a robotic device**
Adapter für eine mikrofluidische Vorrichtung zur Kopplung an eine Robotervorrichtung
Adaptateur pour un dispositif microliquide pour le couplage avec un dispositif de robot

(43) Date of publication of application: 29.04.2009
(73) Proprietor: Agilent Technologies, Inc., Santa Clara CA 95051 (US)
(72) Inventor: Kratzmeier, Martin, 76337 Waldbronn (DE); Falk-Jordan, Stefan, 76135 Karlsruhe (DE)
(74) Representative: Barth, Daniel Mathias

(56) References cited:
- WO-A-00/77511
- DE-A1-102004 023 427
- US-A1- 2003 049 862
- J.R.SCHERER; B.M.PAEGEL;G.J.WEDEMAYER; ET AL: "High-Pressure Gel Loader for Capillary Array Electrophoresis Microchannel Parts" BIOTECHNIQUES, vol. 31, no. 5, 1 November 2001 (2001-11-01), pages 1150-1154,

## Description

### BACKGROUND ART

The present invention relates to priming a microfluidic device, e.g. introducing a gel into the microfluidic device before use.

For running an analysis, the microfluidic device has to be primed with a separation matrix (gel) before use. The separation matrix can be filled into the microfluidic device, for example, manually by using a syringe or by a separate device as disclosed in WO 2006/062805 A2, into which the microfluidic device has to be inserted for priming.

A High-Pressure Gel Loader for Capillary Array Electrophoresis Microchannel Plates is described in J.R. Scherer, et al "High-Pressure Gel Loader for Capillary Array Electrophoresis in Microchannel Plates", BioTechniques 31:1150-1154 (NOVEMBER 2001) (http://www.biotechniques.com/multimedia/archive/00010/01315rr04 10076a.pdf.) A gel matrix is loaded into a microchannel plate by use of a gel-loading/washing system pressurizing the system with helium.

### DISCLOSURE

It is an object of the invention to provide an improved priming of a microfluidic device. The object is solved by the independent claims. Further embodiments are shown by the dependent claims.

According to the invention, a method of filling a microfluidic device with a gel is provided. The microfluidic device is adapted for processing a fluid and comprises a well and a microfluidic channel coupled to the well. The well is filled with the gel, and a pipetting station is equipped with an adapter. Air is intaken into the pipetting station, and the adapter sealingly couples to the well. The intaken air is pressed through the adapter into the well for at least partly filling the microfluidic channel with the gel.

According to embodiments, the adapter comprises a tube adapted for conducting the fluid, and a recess adapted to be fit to a connector of the pipetting station in a fluid tight manner. The tube leads into the recess. The adapter comprises a seal adapted to be pressed against the well of the microfluidic device for coupling in a fluid tight manner the well to the tube. The pipetting station can apply pressure via the tube of the adapter to the well of the microfluidic device, so that a separation matrix is pressed from the well into the microfluidic channel coupled to the well or into a system of channels of the microfluidic device. The microfluidic device can comprise a microfluidic chip adapted for executing an analysis.

For priming the channel system with the separation matrix, the well is filled with the separation matrix. By sealing the well with the seal of the adapter, pressure can be applied to the separation matrix by the pipetting station. The pipetting station can suck in a certain amount of air by the plunger before sealing the well in a fluid tight manner. When the well is sealed, the pipetting station can blow out the air by the plunger. Due to the fluid tightness, the pressure within the tube and the well increases. The pressure can be increased, for example, up to 10 bar. The volume of the air sucked into the robotic device has to be approximately 10 times greater than the volume of the separation matrix to be pressed into the channel system of the microfluidic device including any dead volume of the system. The exact portion of the volume to be sucked in depends in particular on the amount of the separation matrix to be pressed into the channel system, the desired pressure to be applied, and on the dead volume in the well, the tube, and the robotic device. Advantageously, priming the microfluidic chip and equipping the wells of the microfluidic chip with a sample to be analyzed can be executed by the same pipetting station. The volume to be filled into the microfluidic device can be negligibly small compared to the dead volume. For example, the well can be filled with 10 micro liters of the separation matrix, wherein just 2 micro liters have to be filled into the microfluidic chip, and wherein the dead volume can amount to 20 to 50 micro liters. By this, a significant pressure drop while filling the microfluidic device can be avoided.

For running an analysis, the microfluidic device comprises a separation matrix that can be transferred into the channels of the microfluidic device. Therefore, the separation matrix can be filled into one of the wells of the microfluidic device. Additionally, pressure can be applied of a defined amount and over a defined time period for ensuring complete filling of the entire channel system.

The pipetting station may be part of a robotic device . The pipetting station can comprise a robot arm adapted for handling pipettes. Advantageously, the adapter can be fit to the connector of the pipetting station. The connector is adapted to be connected with the pipettes and with the adapter. For priming the microfluidic device, the robot arm can be handled in a way that the adapter is connected to the connector. By this, the pressure can be applied by the plunger via the adapter to the well comprising the separation matrix. Advantageously, the adapter can be used in combination with a variety of commercially available pipetting stations, without any additional pressurizing modules, thus enabling the use of a standard pipetting station for both transfer of liquid (the separation matrix and the sample) as well as transfer of pressure to the microfluidic device. This allows automation of the preparation of microfluidic devices, which has been usually done manually, thus enabling higher sample throughput without the need of additional hardware for pressure supply. A commercially available pipetting station can be used for sucking in air and for pressurizing a fluid tight tube of the adapter coupled to the well by pushing out the air. Applicable pipetting stations can be, for example, epMotion 5070 from Eppendorf, Multi-CHOT from Nichiryo, Equator GX from Deerac, Microlab Starlet from Hamilton, Cybi DiluS from Cybio, Biomek NX from Beckman, Miniprep 60 from Tecan, Precision XS from BioTek, Vivace from Stratec, BioRobot 3000 from Qiagen, Quad-Z 215 from Gilson, and/or similar devices from the same or other manufacturers.

The pipetting station may comprise and/or handle a pipette tip, a reagent vial, a customer sample, the microfluidic chip, the adapter.

Further embodiments may comprise one or more of the following. The seal comprises a projecting portion for reducing the volume within the well. The tube can lead through the portion into the well. For reducing dead volume within the well, the portion can be inserted at least partly into to the well together with the seal by the robot arm of the pipetting station. By reducing the dead volume within the well comprising the separation matrix, the amount of air to be blown out by the pipetting station for increasing the pressure up to a desired value can be reduced.

The seal can be an integral part of the adapter. Therefore, advantageously, the adapter can comprise a sealing material, for example, an elastic material, rubber, and/or silicone.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 shows a schematic view of an laboratory arrangement, comprising an adapter for a microfluidic chip and a robotic device with a pipetting station,

Fig. 2 shows a longitudinal section of an adapter with a seal, and

Fig. 3 shows a longitudinal section of a seal with a projecting portion.

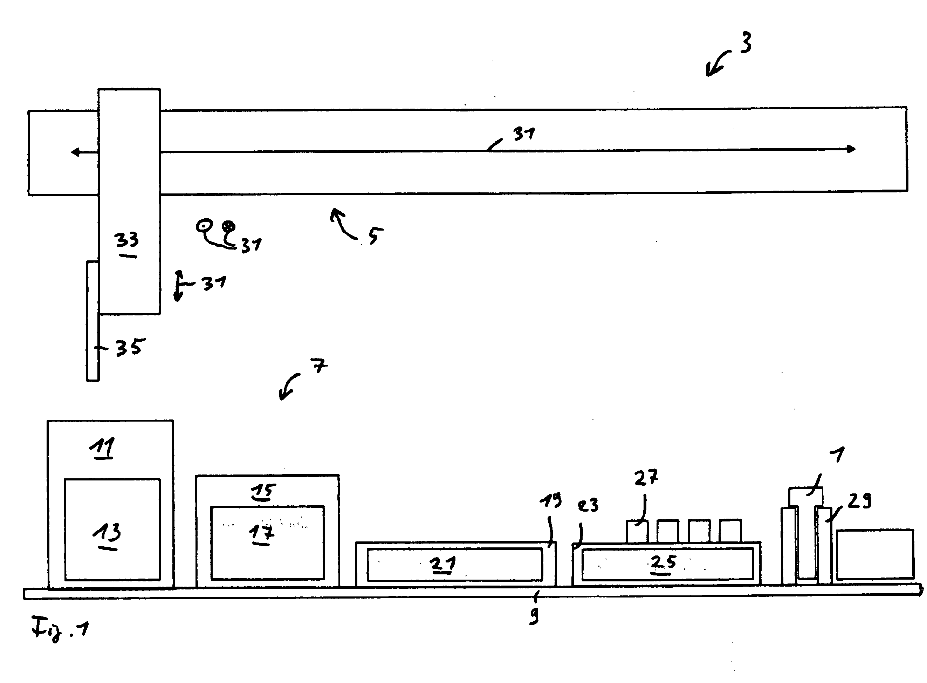

Fig. 1 shows an adapter 1 being part of a schematic view of a laboratory arrangement 3 comprising a robotic device 5 with an pipetting station 7. Fig. 1 shows schematically the setup of the laboratory arrangement 3. The pipetting station 7 comprises a base plate 9, wherein other components of the laboratory arrangement 3 can be mounted temporarily or permanently to the base plate 9. The pipetting station 7 of the laboratory arrangement 3 comprises a first vertical member 11 mounted to the base plate 9 and adapted for providing a plurality of pipette tips 13. Besides this, the pipetting station 7 comprises a second vertical member 15 adapted for providing a plurality of reagent vials 17. Furthermore, the pipetting station 7 comprises a third vertical member 19 adapted for providing at least one customer sample 21. Besides this, the pipetting station 7 comprises a fourth vertical member 23 adapted for fixing a microfluidic device, for example a microfluidic chip 25. The microfluidic chip 25 comprises at least one well 27 adapted for receiving a fluid. Exemplarily, the microfluidic chip 25 is shown with four wells 27. At least one of the wells 27 is adapted for receiving a separation matrix that has to be filled into the channels of the microfluidic chip 25. At least one other well 27 is adapted for receiving the at least one customer sample 21 to be analyzed by the microfluidic chip 25.

The pipetting station 7 comprises a fifth vertical member 29 adapted for receiving the adapter 1. Possibly, the adapter can be designed as a disposable. For this purpose, the vertical member 29 can comprise a plurality of such disposable adapters.

The robotic device 5 is realized at least as a three-axis robotic device allowing three linear movements as symbolized by three double arrows 31. The robotic device 5 comprises a robot arm 33 comprising a connector 35. The connector 35 is adapted to be coupled with the pipette tips 13. Besides this, the connector 35 comprises a not shown tube adapted for conducting a fluid, for example air. For handling the samples and the reagents of the pipetting station 7, the connector 35 can be coupled with a pipette tip. The pipette tip can be dipped into a reagent vial 17 or into the customer sample 21. For sucking the reagent or the sample, the pipetting station comprises a not shown plunger that can be coupled to the not shown tube of the connector and that is adapted for sucking in the sample, the matrix, and/ or the reagent into the pipette tips and for injecting it/them. For manipulating the reagent and the samples, the robot arm 33 of the robotic device 5 can manipulate the pipette tips in a manner, that the liquid/s can be injected into the wells 27 of the microfluidic chip (25).

Besides this, the connector 35 can be coupled to the adapter 1. Advantageously, the adapter 1 can be pressed vertically to one of the wells 27 by the robot arm 33, wherein said well 27 is adapted for receiving a separation matrix, for example, comprised in one of the reagent vials 17. By this, the adapter 1 can be coupled in a fluid tight manner to the connector 35 and to the well 27. For pressing the separation matrix into the channels of the microfluidic chip 25, the plunger of the pipetting station 7 can inject air into a not shown channel of the adapter 1 connecting the connector 35 and the well 27. Due to the fluid tightness, by this, the pressure within the well 27 can be is increased. This can be used for filling the separation matrix into the channels of the microfluidic chip 25. Advantageously, the adapter 1 comes not in contact with the separation matrix. The adapter 1 serves just as a connecting part between the connector 35 and the well 27, and for enabling to provide the well 27 by the plunger of the pipetting station 7.

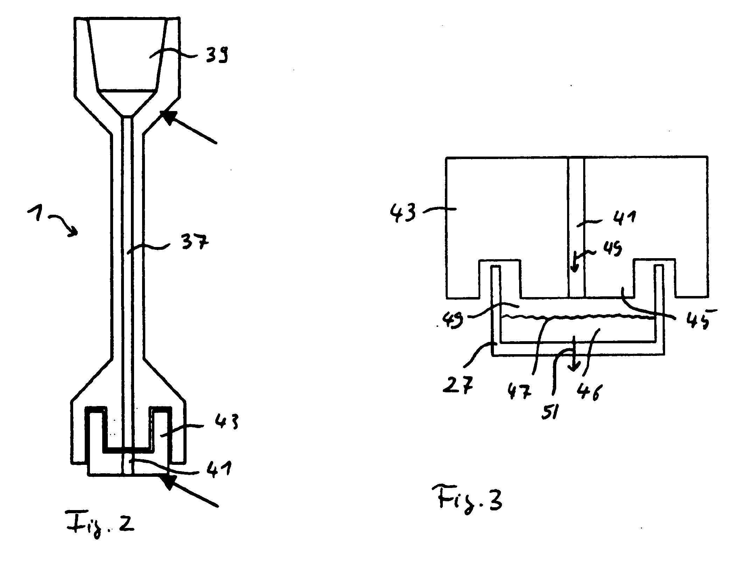

Fig. 2 shows a longitudinal section of a further adapter 1. The adapter 1 is adapted for coupling the connector 35 of the robot arm 33 of the robotic device 5 of the pipetting station 7 and the well 27 of the microfluidic chip 25 in a fluid tight manner. Therefore, the adapter 1 comprises a tube 37 adapted for leading a fluid, for example, a gas, for example air. The tube 37 leads into a recess 39. The recess 39 is conically shaped and is adapted to be connected with a conically shaped outer surface of the connector 35 of the robot arm 33 in a fluid tight manner, wherein a not shown tube of the connector 35 leads into the tube 37 of the adapter 1. The other end of the tube 37 leads into a throughhole 41 of a seal 43. The seal 43 is adapted to be pressed against the well 27 for coupling in a fluid tight manner the well 27 to the throughhole 41 and the tube 37.

Fig. 3 shows a longitudinal section of another seal 43 with a projecting portion 45 together with a schematically shown well 27 of the microfluidic chip 25. The projecting portion 45 projects into the well 27, wherein the total volume remaining between the well 27 and the seal 43 is reduced. The well 27 can comprise a separation matrix 46 as symbolized by a line 47. Air 49 within the well 27 can be compressed by injecting air through the tube 37 and the throughhole 41 of the seal 43 by the not shown plunger of the pipetting station 7. By this, the air 49 can be compressed whereas the separation matrix 45 can be filled into a not shown channel system of the microfluidic chip 25 as symbolized with another arrow 51.

For filling the separation matrix 45 into the microfluidic chip 25, the well 27 can be provided with the separation matrix by a pipette tip 13 of the pipetting station 7. The pipetting station 7 can be equipped with the adapter 1. Advantageously, air can be pressed through the adapter 1 into the well 27 for filling the microfluidic chip 25 with the separation matrix. The adapter 1 can be removed from the connector 35 and set back into the fifth vertical member 29. For compressing the air 49 into the well 27, air can be sucked into the not shown plunger of the pipetting station 7 and compressed for increasing the pressure after connecting the seal 43 with the well 27.

The laboratory arrangement 3 can be adapted for analyzing liquid. More specifically, the microfluidic chip 25 can be adapted for executing at least one microfluidic process, for example an electrophoresis and/or a liquid chromatographic process, for example a high performance liquid chromatographic process (HPLC). Therefore, the microfluidic chip 25 can be coupled to a liquid delivery system, in particular to a pump, and/or to a power source. For analyzing liquid or rather one or more components within the liquid, the microfluidic chip 25 can comprise a detection area, such as an optical detection area and/or an electrical detection area being arranged close to a flow path within the microfluidic chip 25. Otherwise, the microfluidic chip 25 can be coupled to a laboratory apparatus, for example to a mass spectrometer, for analyzing the liquid. For executing an electrophoresis, the flow path can comprise said gel.

It is to be understood, that embodiments described are not limited to the particular component parts of the devices described or to process features of the methods described as such devices and methods may vary. It is also to be understood, that different features as described in different embodiments, for example illustrated with different Fig., may be combined to new embodiments. It is finally to be understood, that the terminology used herein is for the purposes of describing particular embodiments only and it is not intended to be limiting. It must be noted, that as used in the specification and the appended claims, the singular forms of "a", "an", and "the" include plural referents until the context clearly dictates otherwise. Thus, for example, the reference to "an adapter 1" or "a robotic device 5" may include two or more such functional elements.

## Claims

1. A method of filling a microfluidic device with a gel, wherein the microfluidic device is adapted for processing a fluid and comprises a well (27) and a microfluidic channel coupled to the well, the method comprising:
- filling the well (27) with the gel,
- equipping a pipetting station (7) with an adapter (1),
- intaking air into the pipetting station (7),
- sealingly coupling the adapter (1) to the well (27), and
- pressing the intaken air through the adapter (1) into the well (27) for at least partly filling the microfluidic channel with the gel.

2. The method of the above claim, further comprising
- removing the adapter (1) after filling the well (27) of the microfluidic device.

3. The method of claim 1 or 2, wherein
the adapter (1) is coupled between the pipetting station (7) and the microfluidic device to allow the pipetting station (7) to apply pressure to the microfluidic device.

4. The method of any one of the preceding claims, wherein the adapter (1) comprises:
- a tube (37) adapted for conducting a fluid,
- a recess (39) adapted to be fit to a connector (35) of the pipetting station (7) in a fluid tight manner, wherein the tube (37) leads into the recess (39),
- a seal (43) adapted to be pressed against the well (27) of the microfluidic device for coupling in a fluid tight manner the well (27) to the tube (37) and to allow the pipetting station (7) to apply pressure via the tube to the well of the microfluidic device.

5. The method of any one of the preceding claims, wherein the pipetting station (7) comprises and/or is adapted for handling at least one of:
- a pipette tip (13),
- a reagent vial (17),
- a customer sample (21),
- the microfluidic device,
- the adapter (1).

6. The method of any one of the preceding claims, wherein the microfluidic device comprises a microfluidic chip (25) adapted for housing a fluid sample and for separating components of a the fluid sample.

## Patentansprüche

1. Verfahren zum Befüllen einer Mikrofluideinheit mit einem Gel, wobei die Mikrofluideinheit zum Verarbeiten eines Fluids dient und eine Wanne (27) und einen mit der Wanne verbundenen Mikrofluidkanal aufweist, wobei das Verfahren die folgenden Schritte aufweist:
- Befüllen der Wanne (27) mit dem Gel,
- Ausstatten einer Pipettierstation (7) mit einem Adapter (1),
- Einbringen von Luft in die Pipettierstation (7),
- dichtes Verbinden des Adapters (1) mit der Wanne (27), und
- Drücken der eingebrachten Luft durch den Adapter (1) in die Wanne (27), um den Mikrofluidkanal zumindest teilweise mit dem Gel zu befüllen.

2. Verfahren nach dem vorhergehenden Anspruch, das ferner den folgenden Schritt aufweist:
- Abnehmen des Adapters (1) nach dem Befüllen der Wanne (27) der Mikrofluideinheit.

3. Verfahren nach Anspruch 1 oder 2, wobei
der Adapter (1) zwischen die Pipettierstation (7) und die Mikrofluideinheit eingesetzt ist, damit die Pipettierstation (7) einen Druck auf die Mikrofluideinheit ausüben kann.

4. Verfahren nach einem der vorhergehenden Ansprüche, wobei der Adapter (1) aufweist:
- ein Rohr (37) zum Leiten eines Fluids,
- eine Aussparung (39) zum fluiddichten Verbinden mit einem Verbindungsglied (35) der Pipettierstation, wobei das Rohr (37) in die Aussparung (39) führt,
- eine Dichtung (43), die gegen die Wanne (27) der Mikrofluideinheit gedrückt werden kann, um die Wanne (27) fluiddicht mit dem Rohr (37) zu verbinden und damit die Pipettierstation (7) über das Rohr einen Druck auf die Wanne der Mikrofluideinheit ausüben kann.

5. Verfahren nach einem der vorhergehenden Ansprüche, wobei die Pipettierstation (7) mindestens eines der folgenden Merkmale aufweist und/oder diese nutzen kann:
- eine Pipettenspitze (13),
- einen Reagenzienbehälter (17),
- eine Auftragsprobe (21),
- die Mikrofluideinheit,
- den Adapter (1).

6. Verfahren nach einem der vorhergehenden Ansprüche, wobei die Mikrofluideinheit einen Mikrofluid-Chip (25) zum Aufnehmen einer Fluidprobe und zum Trennen der Komponenten der Fluidprobe aufweist.

## Revendications

1. Procédé de remplissage d'un dispositif microfluidique avec un gel, dans lequel le dispositif microfluidique est à même de traiter un fluide et comprend un puits (27) et un canal microfluidique couplé au puits, le procédé comprenant :
- le remplissage du puits (27) avec le gel ;
- l'installation d'un adaptateur (1) sur une station de pipetage (7) ;
- l'admission d'air dans la station de pipetage (7) ;
- le couplage hermétique de l'adaptateur (1) au puits (27), et
- l'injection de l'air admis à travers l'adaptateur (1) dans le puits (27) pour remplir au moins partiellement le canal microfluidique avec le gel.

2. Procédé suivant la revendication précédente, comprenant en outre
- le retrait de l'adaptateur (1) après avoir rempli le puits (27) du dispositif microfluidique.

3. Procédé suivant la revendication 1 ou 2, dans lequel
l'adaptateur (1) est couplé entre la station de pipetage (7) et le dispositif microfluidique pour permettre à la station de pipetage (7) d'exercer une pression sur le dispositif microfluidique.

4. Procédé suivant l'une quelconque des revendications précédentes, dans lequel l'adaptateur (1) comprend :
- un tube (37) à même d'acheminer un fluide ;
- un évidement (39) à même d'être adapté de manière étanche sur un raccord (35) de la station de pipetage (7), dans lequel le tube (37) débouche dans l'évidement (39) ;
- un joint hermétique (43) à même d'être poussé contre le puits (27) du dispositif microfluidique pour coupler de manière étanche le puits (27) au tube (37) et pour permettre à la station de pipetage (7) d'exercer une pression par le biais du tube sur le puits du dispositif microfluidique.

5. Procédé suivant l'une quelconque des revendications précédentes, dans lequel la station de pipetage (7) comprend et/ou est à même de recevoir au moins un des éléments suivants :
- une extrémité de pipette (13),
- une fiole de réactif (17),
- un échantillon de client (21),
- le dispositif microfluidique,
- l'adaptateur (1).

6. Procédé suivant l'une quelconque des revendications précédentes, dans lequel le dispositif microfluidique comprend une puce microfluidique (25) à même de contenir un échantillon de fluide et de séparer des composants de l'échantillon de fluide.
